# EUROPÄISCHE PATENTANMELDUNG

(11) **EP 2 072 478 A1**
(43) Veröffentlichungstag der Anmeldung: **24.06.2009**
(21) Anmeldenummer: 08105963.6
(22) Anmeldetag: 10.12.2008
(51) Int. Cl.: C03C 23/00, B44C 1/00, B44D 5/00

(54) **Hausgerätebauteil und Verfahren zum Bearbeiten eines Hausgerätebauteils**

(30) Priorität: 21.12.2007 ES 200703481
(71) Anmelder: BSH Bosch und Siemens Hausgeräte GmbH, 81739 München (DE)
(72) Erfinder: Buñuel Magdalena, Miguel Angel, 50017 Zaragoza (ES); Ceamanos Gaya, Jesús, 50016 Zaragoza (ES); Delgado Alguacil, José David, 50018 Zaragoza (ES); Garcia Jiménez, Jose Ramon, 50009 Zaragoza (ES); Peña Torre, José Ignacio, 50004 Zaragoza (ES); Schmalenstrot, Rene, 50010 Zaragoza (ES); Sola Martinez, Daniel, 50015 Zaragoza (ES)

(57) **Zusammenfassung**

Die Erfindung geht aus von einem Verfahren zum Bearbeiten eines Hausgerätebauteils (10) aus einem Glas- oder Keramikmaterial.

Um ein vielseitig verwendbares, kostengünstiges Verfahren der gattungsgemäßen Art zum Herstellen einer Markierung und/oder zum Aufbringen einer wärmedämmenden Beschichtung in einem präzise definierten Teilbereich (12) bereitzustellen, wird vorgeschlagen, dass das Glas- oder Keramikmaterial in wenigstens einem Teilbereich (12) des Hausgerätebauteils (10) aufgeschäumt wird.

## Beschreibung

Die Erfindung geht aus von einem Verfahren zum Bearbeiten eines Hausgerätebauteils aus einem Glas- oder Keramikmaterial und von einem Hausgerätebauteil aus einem solchen Material.

Hausgerätebauteile aus Glas- oder Keramikmaterialien werden aus praktischen oder ästhetischen Gründen in vielen Hausgeräten verwendet. Beispielsweise können Abdeckplatten von Kochfeldern, Frontscheiben von Backöfen oder Kühlschränken, Waschmaschinen, Kaffeemaschinen, Kaffeekannen oder andere Behälter aus Glas- oder Keramikmaterialien gefertigt werden. Dabei stellt sich die technische Aufgabe, Markierungen oder zur Wärmedämmung geeignete Beschichtungen auf das Hausgerätebauteil aufzubringen. Aus dem Stand der Technik ist es bekannt, solche Markierungen und/oder Beschichtungen im Siebdruckverfahren auf das Hausgerätebauteil aufzubringen.

Der Erfindung liegt insbesondere die Aufgabe zugrunde, ein vielseitig verwendbares, kostengünstiges Verfahren zum Herstellen einer Markierung und/oder zum Aufbringen einer wärmedämmenden Beschichtung in einem präzise definierten Teilbereich bereitzustellen bzw. ein Hausgerätebauteil mit einer solchen Markierung bzw. Beschichtung auszustatten.

Die Erfindung geht insbesondere aus von einem Verfahren zum Bearbeiten eines Hausgerätebauteils aus einem Glas- oder Keramikmaterial.

Es wird vorgeschlagen, dass das Glas- oder Keramikmaterial in wenigstens einem Teilbereich des Hausgerätebauteils aufgeschäumt wird. Um das Glas- oder Keramikmaterial aufzuschäumen, muss dieses zunächst verflüssigt oder zumindest aufgeweicht werden, so dass Gaseinschlüsse in das Glas- oder Keramikmaterial eingebracht werden können, was nach dem Aushärten zu einer offenporigen oder geschlossenporigen Schaumstruktur führt. Als "aufgeschäumt" soll in diesem Zusammenhang insbesondere ein Material bezeichnet werden, in welchem das eingeschlossene Gas einen Volumenanteil von mehr als 10%, besser noch mehr als 30% und vorzugsweise mehr als 50 % des Volumens ausmacht.

Der aufgeschäumte Teilbereich kann insbesondere an einer Oberfläche des Hausgerätebauteils angeordnet werden, was zu einer gleichzeitig ästhetisch ansprechenden wie auch robusten Gestaltung führen kann. Die Gaseinschlüsse verringern eine Wärmeleitfähigkeit des Glas- oder Keramikmaterials in einer erheblichen Weise, so dass der Teilbereich eine wärmedämmende Funktion übernehmen kann. Da keine weiteren Materialien hinzugefügt werden müssen, können insbesondere an Hausgeräten schadstoffhaltige Beschichtungen sicher vermieden werden. Aufgrund der inerten Eigenschaften des Glas- oder Keramikmaterials können Verunreinigungen von Lebensmitteln wirkungsvoll vermieden werden. Ferner können durch das Aufbringen eines aufgeschäumten Teilbereichs die haptischen Eigenschaften des Hausgerätebauteils verbessert werden bzw. individuell gestaltet werden. Beispielsweise kann in bestimmten Bereichen eine Griffigkeit des Glas- oder Keramikmaterials verbessert werden.

Eine besonders präzise Abgrenzung und Formgebung des Teilbereichs kann erreicht werden, wenn das Glas- oder Keramikmaterial in dem Teilbereich mit einem Laserstrahl bearbeitet bzw. aufgeschäumt wird. Dabei hat es sich erwiesen, dass eine besonders vorteilhafte Schaumstruktur erreichbar ist, wenn der Teilbereich vor dem Aufschäumen erhitzt wird, und zwar insbesondere auf eine Temperatur von ca. 300°C bis 400°C. Während bei geringeren Materialtemperaturen die von einem Laser herausgeschlagenen Partikel einen Interaktionsbereich zwischen Laser und Glaskeramikmaterial aufgrund ihrer hohen kinetischen Energie schnell verlassen, bewirkt das Erhitzen des Glas- oder Glaskeramikschichtmaterials auf den genannten Temperaturbereich eine höhere Viskosität des Materials, so dass von dem Laserstrahl herausgeschlagene Partikel den Interaktionsbereich zwischen dem Laserstrahl und dem Glas- oder Keramikmaterial nicht verlassen können, aufgrund der Gravitation zurück auf die bearbeitete Oberfläche fallen und dort kleben bleiben. Insgesamt entsteht so eine schaumartige Struktur.

Die Vorteile des erfindungsgemäßen Verfahrens kommen insbesondere dann zum Tragen, wenn das Hausgerätebauteil eine Abdeckplatte eines Kochfelds ist. Der Teilbereich kann eine Markierung oder Verzierung des Hausgerätebauteils sein, im Fall der Abdeckplatte eines Kochfelds beispielsweise eine Markierung zum Visualisieren von Heizzonen und/oder von Berührungssensoren, ein Schriftzug mit einem Markenzeichen eines Herstellers, eine Beschriftung, ein Piktogramm oder eine Markierung, die einem Bedienelement zugeordnet ist oder dergleichen.

Ferner kann der Teilbereich als Wärmeabschirmung in das Hausgerätebauteil eingearbeitet sein, beispielsweise zum Abschirmen von durch das Glas- oder Glaskeramik-Hausgerätebauteil abgedeckten elektrischen oder elektronischen Schaltkreisen.

Der Teilbereich kann in eine im montierten Zustand des Hausgerätebauteils für einen Benutzer zugängliche oder in eine für den Benutzer unzugängliche Oberfläche des Hausgerätebauteils eingearbeitet sein. Während im letzteren Fall die wärmedämmenden und ästhetischen sowie praktischen Eigenschaften des Teilbereichs vorteilhaft zum Tragen kommen, ohne die Oberflächenstruktur und damit die Reinigungseigenschaften des Hausgerätebauteils zu beeinflussen, können im ersten Fall durch den Teilbereich die Griffigkeit der Oberfläche sowie deren optische Eigenschaften gezielt beeinflusst werden.

Ferner betrifft die Erfindung ein Hausgerätebauteil aus einem Glas- oder Keramikmaterial der oben beschriebenen Art.

Es wird vorgeschlagen, dass das Glaskeramikmaterial in wenigstens einem Teilbereich des Hausgerätebauteils eine schaumartige Materialstruktur aufweist.

Weitere Vorteile ergeben sich aus der nachfolgenden Figurenbeschreibung. Die Beschreibung, die Figuren und die Ansprüche enthalten die vorgenannten Merkmale sowie weitere Merkmale in speziellen Kombinationen. Der Fachmann wird die Merkmale auch einzeln oder in weiteren Kombinationen betrachten, deren Vorteile erkennen und weitere Ausführungsbeispiele im Sinne der Erfindung durch das Bilden von weiteren Unterkombinationen von Merkmalen finden.

Dabei zeigen:
- Fig. 1: eine schematische Darstellung zu einem Verfahren zum Bearbeiten eines Hausgerätebauteils aus einem Glas- oder Keramikmaterial,
- Fig. 2: ein Kochfeld mit einem als Abdeckplatte ausgebildeten Hausgerätebauteil nach einem Ausführungsbeispiel der Erfindung,
- Fig. 3: ein Kochfeld mit einem als Abdeckplatte ausgebildeten Hausgerätebauteil nach einem weiteren Ausführungsbeispiel der Erfindung, in welchem der Teilbereich eine Markierung von Berührungssensoren einer Bedieneroberfläche bildet
- Fig. 4: ein Hausgerätebauteil nach einem weiteren Ausführungsbeispiel der Erfindung in welchem der Teilbereich ein Markenzeichen bildet und
- Fig. 5: ein Hausgerätebauteil nach einem weiteren Ausführungsbeispiel der Erfindung, in welchem der Teilbereich als Wärmeabschirmung in das Hausgerätebauteil eingearbeitet ist.

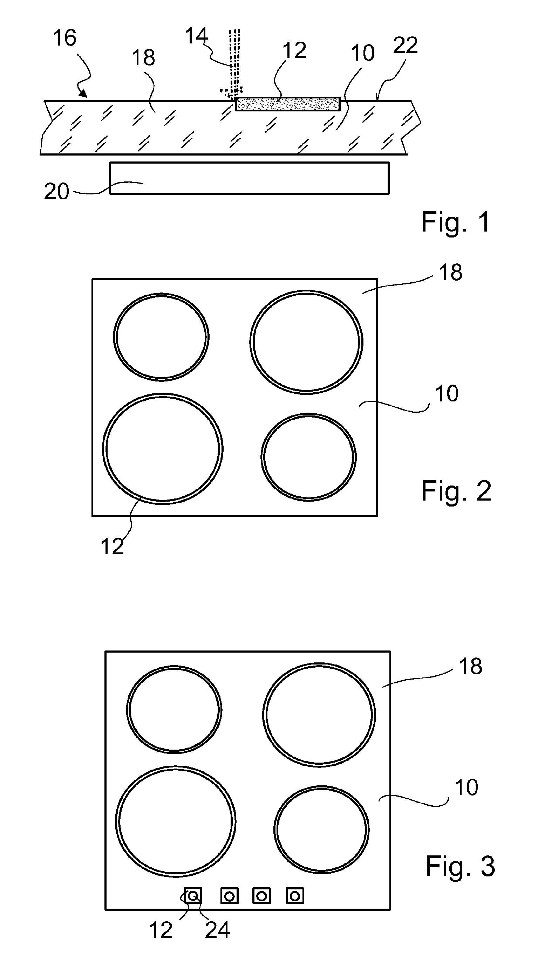

Figur 1 zeigt schematisch ein Verfahren zum Bearbeiten eines Hausgerätebauteils 10 aus einem Glas- oder Keramikmaterial. Für das Verfahren geeignet sind insbesondere Standardgläser oder Glaskeramiken sowie Steinzeug. In dem in Figur 1 dargestellten Ausführungsbeispiel ist das Hausgerätebauteil 10 eine Abdeckplatte 18 eines Kochfelds 16. Unter dem Hausgerätebauteil 10 ist ein Heizelement 20 angeordnet, mit welchem das Hausgerätebauteil 10 zu seiner Bearbeitung derart erhitzt wird, dass seine Oberseite 22 eine Temperatur von ca. 300 °C bis 400 °C erreicht. Das Heizelement 20 kann beispielsweise ein normaler Strahlungsheizkörper des Kochfelds 16 sein.

Das derart erhitzte Glas- oder Keramikmaterial des Hausgerätebauteils 10 wird mit einem Laser, insbesondere einem Infrarotlaser, punktuell erhitzt, so dass das Material in einem Teilbereich 12 aufgeschäumt wird. Dabei werden durch den Laserstrahl 14 kleine Teilchen aus dem Glas- oder Keramikmaterial des Hausgerätebauteils 10 herausgeschlagen, die zurück in die Wechselwirkungszone zwischen dem Laserstrahl 14 und dem Hausgerätebauteil 10 fallen und dort haften bleiben. Es entsteht eine schaumartige Struktur. Durch eine geeignete Wahl der Parameter, insbesondere der Temperatur des Glas- oder Keramikmaterials bei der Bearbeitung und der Intensität und Wellenlänge des Laserstrahls 14, kann die Schaumstruktur des Teilbereichs 12 an die speziellen Zwecke der spezifischen Anwendung angepasst werden.

In dem durch den Laserstrahl 14 bearbeiteten Teilbereich 12 ragt das schaumartige Material nach dem Aufschäumprozess über die Oberfläche des Hausgerätebauteils 10 hinaus, was in Figur 1 erkennbar ist. Falls dies nicht erwünscht ist, kann der über die Oberfläche hinausragende Teil des aufgeschäumten Materials auch abgetragen werden, beispielsweise durch Schleifen. Wenn eine offenporige Struktur der Oberfläche nicht erwünscht ist, kann diese beispielsweise mit Kunstharz versiegelt werden.

Das Glas- oder Keramikmaterial des Hausgerätebauteils 10 kann auch in einer anderen Weise vor der Bearbeitung durch den Laserstrahl 14 erhitzt werden, beispielsweise durch einen weiteren Laserstrahl oder durch andersartige Heizelemente. Um eine homogene Schaumstruktur im Teilbereich 12 zu erreichen, sollte das Glas- oder Keramikmaterial des Hausgerätebauteils möglichst homogen erhitzt werden. Bei der Verwendung des erfindungsgemäßen Verfahrens zur Bearbeitung von Abdeckplatten 18 eines Kochfelds 16 können die ohnehin vorhandenen Heizelemente 20 des Kochfelds 16 verwendet werden und die Herstellung des Teilbereichs 12 kann beispielsweise auch nach der Verbindung der Abdeckplatte 18 mit einem Gehäuse des Kochfeldes 16 (hier nicht dargestellt) erfolgen.

Figur 2 zeigt ein Ausführungsbeispiel der Erfindung, in dem kreisförmige Markierungen zum Visualisieren von Heizzonen in die Abdeckplatte 18 des Kochfelds 16 eingearbeitet sind. Das als Abdeckplatte 18 ausgebildete Hausgerätebauteil 10 umfasst daher vier ringförmige Teilbereiche 12, die auf einer in einer montierten Konfiguration der Abdeckplatte 18 dem Bediener zugewandten oder dem Bediener abgewandten Seite der Abdeckplatte 18 in deren Oberfläche eingearbeitet sein können.

Figur 3 zeigt ein weiteres Ausführungsbeispiel der Erfindung, in dem unterhalb einer Abdeckplatte 18 aus Glas- oder Glaskeramik, die ein Hausgerätebauteil 10 im Sinne der Erfindung ist, mehrere Berührungssensoren 24 vom kapazitiven oder induktiven Typ angeordnet sind. An einer Oberseite der Abdeckplatte 18, d.h. einer dem Bediener zugewandten bzw. zugänglichen Seite, sind im Bereich der Berührungssensoren 24 jeweils aufgeschäumte Teilbereiche 12 angeordnet, deren Oberfläche im Vergleich zu der glatten Oberfläche in der Umgebung der Teilbereiche 12 eine raue Struktur hat, so dass die Griffigkeit des Hausgerätebauteils 10 in diesem Bereich erhöht ist.

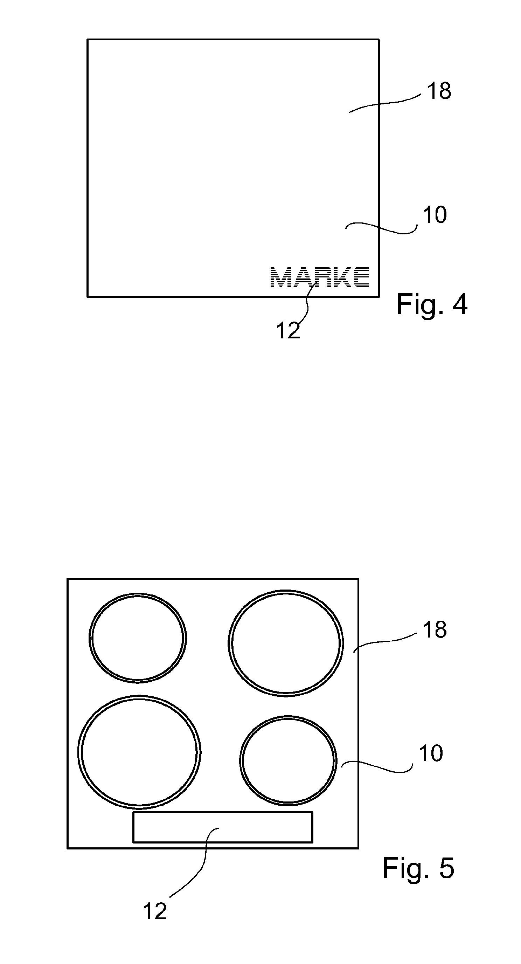

Figur 4 zeigt ein weiteres Ausführungsbeispiel der Erfindung, in welchem ein Teilbereich 12 mit der aufgeschäumten Materialstruktur die Form eines Markenzeichens eines Herstellers eines Kochfelds 16 mit einer Abdeckplatte 18 aus Glas oder Glaskeramik bildet. Auch hier kann der Teilbereich 12 an einer dem Bediener unzugänglichen oder an einer dem Bediener zugänglichen Oberfläche der Abdeckplatte 18 angeordnet sein.

Figur 5 zeigt ein weiteres Ausführungsbeispiel der Erfindung, in welchem ein Teilbereich 12 in ein als Abdeckplatte 18 ausgebildetes Hausgerätebauteil 10 eines Kochfelds 16 eingearbeitet ist, und zwar in einem Teilbereich 12, in welchem in der montierten Konfiguration eine Steuerungselektronik des Kochfelds 16 von der Abdeckplatte 18 abgedeckt wird. Der Teilbereich 12 hat die Funktion daher einer Wärmeabschirmung zum Schützen der Steuerungselektronik und ist in einem für einen Benutzer unzugänglichen Bereich des Hausgerätebauteils 10 angeordnet.

Auch wenn die vorgenannten Ausführungsbeispiele jeweils nur Abdeckplatten von Kochfeldern betreffen, kann das erfindungsgemäße Verfahren auch auf andersartige Hausgerätebauteile, beispielsweise Scheiben von Backofen- oder Kühlschranktüren, Touch-Kontrollelemente von weiteren Hausgeräten, Glasbehältnisse, Waschmaschinen, Wäschetrockner oder dergleichen angewandt werden.

In einem weiteren, hier nicht dargestellten Ausführungsbeispiel ist der Teilbereich eine Menge von über eine dem Bediener zugängliche Oberfläche hinaus ragenden, punktförmigen Erhebungen, die Bedieninformationen als Blindenschrift oder andere für Blinde nutzbare Informationen darstellen.

### Bezugszeichen

- 10: Hausgerätebauteil
- 12: Teilbereich
- 14: Laserstrahl
- 16: Kochfeld
- 18: Abdeckplatte
- 20: Heizelement
- 22: Oberseite
- 24: Berührungssensor

## Patentansprüche

1. Verfahren zum Bearbeiten eines Hausgerätebauteils (10) aus einem Glas- oder Keramikmaterial, **dadurch gekennzeichnet, dass** das Glas- oder Keramikmaterial in wenigstens einem Teilbereich (12) des Hausgerätebauteils (10) aufgeschäumt wird.

2. Verfahren nach Anspruch 1, **dadurch gekennzeichnet, dass** zum Aufschäumen des Glas- oder Keramikmaterials der Teilbereich (12) mit einem Laserstrahl (14) bearbeitet wird.

3. Verfahren nach Anspruch 2, **dadurch gekennzeichnet, dass** der Teilbereich (12) vor dem Aufschäumen erhitzt wird.

4. Verfahren nach Anspruch 3, **dadurch gekennzeichnet, dass** der Teilbereich (12) vor dem Aufschäumen auf ca. 300°C - 400°C erhitzt wird.

5. Verfahren nach einem der vorhergehenden Ansprüche, **dadurch gekennzeichnet, dass** der Teilbereich (12) eine Markierung oder Verzierung des Hausgerätebauteils (10) bildet.

6. Verfahren nach einem der vorhergehenden Ansprüche, **dadurch gekennzeichnet, dass** das Hausgerätebauteil (10) eine Abdeckplatte (18) eines Kochfelds (16) ist.

7. Verfahren nach einem der vorhergehenden Ansprüche, **dadurch gekennzeichnet, dass** der Teilbereich (12) als Wärmeabschirmung in das Hausgerätebauteil (10) eingearbeitet wird.

8. Verfahren nach einem der vorhergehenden Ansprüche, **dadurch gekennzeichnet, dass** der wenigstens eine aufgeschäumte Teilbereich (12) in eine im montierten Zustand des Hausgerätebauteils (10) für einen Benutzer zugängliche Oberfläche des Hausgerätebauteils (10) eingearbeitet wird.

9. Verfahren nach einem der vorhergehenden Ansprüche, **dadurch gekennzeichnet, dass** der wenigstens eine aufgeschäumte Teilbereich (12) in eine im montierten Zustand des Hausgerätebauteils (10) für einen Benutzer unzugängliche Oberfläche des Hausgerätebauteils (10) eingearbeitet wird.

10. Hausgerätebauteil aus einem Glas- oder Keramikmaterial, **dadurch gekennzeichnet, dass** das Glas- oder Keramikmaterial in wenigstens einem Teilbereich (12) des Hausgerätebauteils (10) eine schaumartige Materialstruktur aufweist.

11. Hausgerätebauteil nach Anspruch 10, **dadurch gekennzeichnet, dass** der Teilbereich (12) zum Aufschäumen des Glas- oder Keramikmaterials mit einem Laserstrahl (14) bearbeitet ist.

12. Hausgerätebauteil nach Anspruch 11, **dadurch gekennzeichnet, dass** der Teilbereich (12) vor dem Aufschäumen auf ca. 300°C - 400°C erhitzt wurde.

13. Hausgerätebauteil nach einem der Ansprüche 10 - 12, **dadurch gekennzeichnet, dass** der Teilbereich (12) eine Markierung oder Verzierung des Hausgerätebauteils (10) bildet.

14. Hausgerätebauteil nach einem der Ansprüche 10 - 13, **dadurch gekennzeichnet, dass** der Teilbereich (12) eine Wärmeabschirmung ist.

15. Hausgerätebauteil nach einem der Ansprüche 10 - 14, **dadurch gekennzeichnet, dass** der aufgeschäumte Teilbereich (12) in eine im montierten Zustand des Hausgerätebauteils (10) für einen Benutzer zugängliche Oberfläche des Hausgerätebauteils (10) eingearbeitet ist.
